(19) Europäisches Patentamt
European Patent Office
Office européen des brevets

(11) **EP 2 865 913 A1**

(12) **EUROPEAN PATENT APPLICATION**
published in accordance with Art. 153(4) EPC

(43) Date of publication:
**29.04.2015 Bulletin 2015/18**

(51) Int Cl.:
*F16D 48/02* (2006.01)     *F16H 61/02* (2006.01)

(21) Application number: **12879304.9**

(22) Date of filing: **20.06.2012**

(86) International application number:
**PCT/JP2012/065699**

(87) International publication number:
**WO 2013/190653 (27.12.2013 Gazette 2013/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Toyota Jidosha Kabushiki Kaisha Toyota-shi, Aichi-ken, 471-8571 (JP)**

(72) Inventors:
• **MITSUYASU, Masaki**
  **Aichi-ken, 471-8571 (JP)**
• **KIM, Jonggap**
  **Aichi-ken, 471-8571 (JP)**
• **SHONO, Shoichi**
  **Aichi-ken 471-8571 (JP)**
• **MOTOZONO, Yoshikazu**
  **Aichi-ken, 471-8571 (JP)**

(74) Representative: **Kuhnen & Wacker Patent- und Rechtsanwaltsbüro Prinz-Ludwig-Straße 40A 85354 Freising (DE)**

(54) **VEHICLE CONTROLLER**

(57) A vehicle control system is provided. The vehicle control system is applied to a vehicle having a clutch device to selectively connect and disconnect a power transmission route between a prime mover and drive wheels, and configured to disconnect the power transmission route during running to allow the vehicle to coast. The vehicle control system is comprised of: a means that detects a vehicle speed; a means that detects an operation of an accelerator by a driver; an execution means that executes a coasting control when an operating amount of an accelerator is reduced to be smaller than a predetermined value during running, by bringing the clutch device into disengagement to disconnect the power transmission route so as to allow the vehicle to coast; an estimation means that estimates a decelerating demand of the driver during execution of the coasting control; and a returning means that terminates the coasting control by bringing the clutch device into engagement to connect the power transmission route, and that increases a speed ratio of the automatic transmission when the decelerating demand is expected to increase.

Fig. 2

EP 2 865 913 A1

## Description

TECHNICAL FIELD

The present invention relates to a control system for a vehicle that is provided with a clutch device for selectively connect and disconnect a prime mover to/from drive wheels through a power transmission route, and that is allowed to coast by bringing the clutch device into disengagement.

BACKGROUND ART

In order to improve fuel economy, a fuel cut-off control for stopping fuel supply to an engine during running, and a coasting control for coasting the vehicle by disconnecting the engine from a drive line during running have been employed in recent years. Specifically, the fuel cut-off is carried out to stop fuel supply to the engine given that an accelerator is returned to close an accelerator valve completely, and that an engine speed is higher than an idling speed so that a vehicle speed is higher than a predetermined speed. Under the fuel cut-off control, although the combustion of fuel in the engine is stopped, the engine is still rotating by a torque from the drive wheels. Therefore, a braking torque resulting from a pumping loss of the engine and a friction torque is applied to the drive wheels. Consequently, an engine braking force is applied to the vehicle.

For example, the coasting control is carried out when the accelerator is returned during running to coast the vehicle without rotating the engine passively by bringing the clutch into disengagement disposed between the engine and the drive wheels. Therefore, under the coasting control, the engine braking force will not be applied to the vehicle so that the vehicle is allowed to coast utilizing an inertia energy.

The coasting control may be carried out not only by stopping the fuel supply to the engine but also without stopping the fuel supply to the engine while lowering the engine speed close to the idling speed. In case of carrying out the coasting control while stopping the engine, the fuel will not be consumed during coasting the vehicle so that the fuel economy can be improved significantly By contrast, in case of carrying out the coasting control without stopping the engine, the fuel economy will not be improved as the case of stopping the engine. In this case, however, it is not necessary to arrange additional devices for insuring a required oil pressure under cessation of the engine such as an electric oil pump, a hydraulic accumulator etc. Therefore, the coasting control can be carried out easily without requiring additional modification of the vehicle and additional equipment. In the following explanation, the coasting control without stopping the engine will be called the "neutral coasting control" or the "N coasting control".

For example, Japanese Patent Laid-Open No. 2011-163535 describes a controller for mechanical automatic transmission configured to carry out the coasting control. According to the teachings of Japanese Patent Laid-Open No. 2011-163535, an input shaft of a geared transmission is connected to an output shaft of an engine though a friction clutch, and an alteration of engagement state of the clutch and a speed change operation of the transmission are carried out automatically. To this end, a coasting of the vehicle is determined based on a vehicle speed, an execution of a speed change of the transmission, and an accelerator opening. Given that the coasting of the vehicle is continued for a predetermined period of time, the clutch is brought into disengagement and the vehicle speed is lowered to an idling speed. In case the vehicle is not coasting after disengaging the clutch, a target gear stage of the transmission is established according to the vehicle speed and the accelerator opening, and then the clutch is brought into engagement.

Japanese Patent Laid-Open No. 2010-60010 describes a control device for automatic transmission. According to the teachings of Japanese Patent Laid-Open No. 2010-60010, a power transmission between an engine and drive wheels is selectively interrupted by a clutch, and a vehicle speed is maintained to a constant speed during running down a downslope. When the vehicle runs down a slope where a downgrade is smaller than a set value, a sliding fastening control of the clutch is executed without altering a speed ratio. In this case, if the downgrade of the slope exceeds the set value, the vehicle speed is maintained to a constant speed. Specifically, if the vehicle speed is increased during maintaining the vehicle speed to the constant speed, a downshifting is carried out. By contrast, if the vehicle speed is reduced, an upshifting is carried out. If a change in the vehicle speed is within a predetermined range, the speed ratio is also fixed.

Japanese Patent Laid-Open No. 2008-106841 describes a speed change controller for automatic transmission having a torque converter with a lockup clutch. According the teachings of Japanese Patent Laid-Open No. 2008-106841, in case of altering a gear stage of the transmission, a synchronous speed between an engine speed and an input speed of the transmission is calculated. In addition, a friction element transmitting power under the current gear stage is brought into disengagement to bring the transmission into a neutral state, and another friction element for transmitting power under another gear stage to be achieved is brought into engagement after synchronizing the engine speed and the input speed. Japanese Patent Laid-Open No. 2008-106841 further describes to carry out a fuel cut-off during coasting of the vehicle. The fuel cut-off is interrupted if a speed change while synchronizing the rotational speeds is carried out during the coasting, and the lockup clutch is brought into complete engagement after restarting the fuel cut-off.

As described, according to the teachings of Japanese Patent Laid-Open No. 2011-163535, the friction clutch is brought into disengagement during the coasting of vehicle so that the vehicle is allowed to be propelled by inertia force, and the engine speed is lowered to the idling speed. therefore, fuel economy of the vehicle can be improved. However, if the friction clutch is disengaged while the vehicle is coasting on a downslope, a driver may feel uncomfortable feeling or fear. That is, if the friction clutch is disengaged while the vehicle is coasting on a downslope, an engine brake will not be applied to the vehicle and the vehicle speed is continuously increased during coasting on the downslope. In this situation, the driver cannot feel a decelerating feeling but uncomfortable feeling or fear.

DISCLOSURE OF THE INVENTION

The present invention has been conceived noting the foregoing technical problem, and it is therefore an object of the present invention is to provide a vehicle control system for carrying out the coasting control of a vehicle by interrupting a power transmission between a prime mover and drive wheels, without diminishing drivability of the vehicle.

The vehicle control system of the present invention is applied to a vehicle having a clutch device adapted to selectively connect and disconnect a power transmission route between a prime mover and drive wheels, and that is configured to disconnect the power transmission route during running to allow the vehicle to coast. In order to achieve the above-mentioned objective, the vehicle control system is provided with: a means that detects a vehicle speed; a means that detects an operation of an accelerator by a driver; an execution means that executes a coasting control when an operating amount of an accelerator is reduced to be smaller than a predetermined value during running, by bringing the clutch device into disengagement to disconnect the power transmission route so as to allow the vehicle to coast; an estimation means that estimates a decelerating demand of the driver during execution of the coasting control; and a returning means that terminates the coasting control by bringing the clutch device into engagement to connect the power transmission route, and that increases a speed ratio of the automatic transmission when the decelerating demand is expected to increase.

The estimation means may be configured to determine a fact that the decelerating demand increases if an increasing amount of the vehicle speed is larger than a predetermined value.

The vehicle control system is further provided with a means that detects an acceleration of the vehicle. In addition, the estimation means may also be configured to determine a fact that the decelerating demand increases if at least any of a longitudinal acceleration and a lateral acceleration of the vehicle is greater than a predetermined value.

The vehicle control system is further provided with a means that detects a road gradient. In addition, the estimation means may also be configured to determine a fact that the decelerating demand increases if the road gradient is steeper than a predetermined downgrade.

The vehicle control system is further provided with a means that detects a steering angle of the vehicle. In addition, the estimation means may also be configured to determine a fact that the decelerating demand increases if the steering angle is larger than a predetermined angle.

The vehicle control system is further provided with a means that detects an output speed of an output shaft of the prime mover. In addition, the returning means may also be configured to adjust the output speed of the prime mover to a target input speed of the automatic transmission of a case in which the speed ratio is increased, when the clutch device is brought into engagement.

The execution means may also be configured to execute the coasting control if the operating amount of the accelerator is reduced to be smaller than the predetermined value during running, and the vehicle runs at a speed higher than a predetermined speed. In addition, the returning means may also be configured to terminate the coasting control when the vehicle speed is reduced to be lower than the predetermined speed.

An engine for generating power by burning fuel may be used as the prime mover, and the vehicle control system is further provided with an engine speed detection means. The execution means may also be configured to execute the coasting control if the operating amount of the accelerator is reduced to be smaller than the predetermined value during running and the engine is combusted, and to control the engine during execution of the coasting control in a manner such that the engine speed is reduced to an idling speed that is lower than that of the case in which the vehicle runs without carrying out the coasting control.

Thus, according to the present invention, the clutch device is brought into disengagement to disconnect the power transmission route between the prime mover and the drive wheels. That is, the coasting control is executed to allow the vehicle to coast. Consequently, a cruising distance of the vehicle can be extended without applying a load to the prime mover so that the energy efficiency of the vehicle can be improved.

As described, the control system of the present invention estimates the prospective decelerating demand of the driver based on a change in the vehicle speed an acceleration, a change in a road gradient during execution of the coasting control. If the decelerating demand is expected to increase, the clutch device is brought into engagement to terminate the coasting control, and the speed ratio of the automatic transmission is increased to be larger than the current speed ratio. That is, a downshifting is carried out. Thus, if the decelerating demand is expected to increase, the coasting control is terminated to apply a braking torque derived from a load and a resistance of the power transmission route is applied to the drive wheels. In addition, a braking force resulting from the downshifting of the automatic transmission is also applied to the vehicle. Therefore, the vehicle can be decelerated in line with the decelerating or braking demand of the driver during execution of the coasting control. For this reason, the coasting control can be carried out properly without diminishing drivability of the vehicle.

As also described, the control system of the present invention estimates the prospective decelerating demand based on an increasing amount of the vehicle speed, an acceleration of the vehicle, a road grade, or a steering angle. Specifically, if the increasing amount of the vehicle speed exceeds the predetermined value, if the longitudinal or lateral acceleration exceeds the predetermined value, if the road grade is steeper than the predetermined downgrade, or if the steering angle of the vehicle exceeds he predetermined value, the decelerating demand is expected to increase. Therefore, the decelerating demand of the driver can be estimated accurately during execution of the coasting control so that the coasting control can be carried out properly.

According to the present invention, the coasting control may also be executed and terminated taking account of the vehicle speed. For example, the coasting control is allowed to be carried out if the vehicle speed is higher than a predetermined speed where the coasting control is effective, and the coasting control is inhibited if the vehicle speed is lower than a predetermined speed where the coasting control is not effective. Thus, the coasting control can be appropriately executed and terminated depending on a situation.

In addition, given that the control system pf the present invention is applied to a vehicle in which the engine is used as the prime mover, the coasting control can be carried out taking account of an operating condition of the engine such as an engine speed. That is, the coasting control can be carried out while combusting the engine, and in this case, the engine speed is kept to the idling speed during the execution of the coasting control. Therefore, the coasting control can be carried out effectively to improve fuel economy.

BRIEF DESCRIPTION OF THE DRAWINGS

Fig. 1 is a view schematically showing an example of a drive line and a control line of the vehicle to which the control system of the present invention is applied.
Fig. 2 is a flowchart showing one example of the coasting control carried out by the control system of the present invention.
Fig. 3 shows one example of a map used in the coasting control according to the present invention.
Fig. 4 shows one example of a map used in the coasting control according to the present invention.
Fig. 5 is a time chart showing behaviors of the prime mover and the automatic transmission during execution of the coasting control of the present invention.

DESCRIPTION OF THE PREFERRD EMBODIMENT(S)

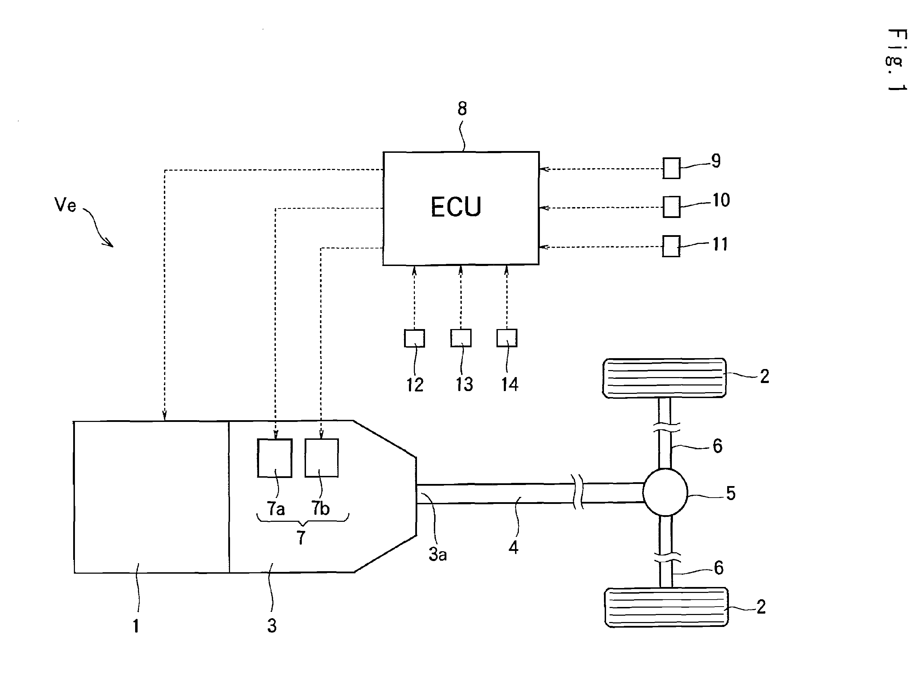

Next, the present invention will be explained in more detail with reference to the accompanying drawings. Fig. 1 shows a drive line and a control line of the vehicle to which the control system of the present invention is applied. As shown in Fig. 1, the vehicle Ve is comprised of an engine 1, and an automatic transmission 3 connected to an output side of the engine 1 to transmit a power of the engine 1 to drive wheels 2. Specifically, the automatic transmission 3 is disposed on the output side of the engine 1, and an output shaft 3a of the automatic transmission 3 is connected to the drive wheels 2 to transmit power therebetween through a propeller shaft 4, a differential gear 5 and a drive shaft 6. Thus, Fig. 1 shows an example of rear-drive layout of the vehicle Ve in which the engine 1 is connected to the rear drive wheels 2 through the propeller shaft 4. However, the control system of the present invention may also be applied to a front drive vehicle and a four-wheel drive vehicle.

The engine 1 serves as a prime mover of the present invention, and for example, an internal combustion engine for generating a power by burning fuel such as a gasoline engine, a diesel engine a natural gas engine and etc. may be used. According to the example shown in Fig. 1, the gasoline engine is used as the engine 1, and the engine 1 is comprised of an electronic throttle valve an opening degree thereof is controlled electrically, and a fuel injector an injecting amount thereof is controlled electrically. Therefore, the engine 1 can be operated in an optimally fuel efficient manner by electrically controlling a rotational speed with respect to a predetermined load.

The automatic transmission 3 is adapted to transmit a torque of the engine 1 to the drive wheels 2 while carrying out a speed change. For example, a geared automatic transmission (AT), a belt-driven or toroidal continuously variable transmission (CVT), a dual-clutch automatic transmission (DCT) based on a geared manual transmission, an automatic clutch manual transmission (AMT) and so on may be used as the automatic transmission 3. The vehicle Ve is further provided with a clutch device 7 adapted to selectively allow a power transmission between the engine 1 and the drive wheels 2, irrespective of a type of the automatic transmission 3, and irrespective of a drive system such as a front drive system, a rear drive system and a four wheel drive system.

According to the example shown in Fig. 1, a geared automatic transmission having a planetary gear unit is employed as the automatic transmission 3. As the conventional AT, the automatic transmission 3 is comprised of a plurality of planetary gear units (not shown), a forward clutch 7a engaged to establish a forward stage, and a reverse brake 7b engaged to establish a reverse stage. Optionally, the automatic transmission 3 may be provided with an additional clutch or brake to be engaged to establish a predetermined forward stage. Accordingly, the automatic transmission 3 is brought into a neutral stage by disengaging both of the forward clutch 7a and the reverse brake 7b. As a result of thus disengaging the forward clutch 7a and the reverse brake 7b, the engine 1 is disconnected from the drive wheels 2 so that the power transmission therebetween is interrupted. Accordingly, in the example shown in Fig. 1, the clutch device 7 comprised of the forward clutch 7a and the reverse brake 7b serves as the clutch device of the invention.

As described, the CVT may be used as the automatic transmission 3. The conventional CVT is comprised of a belt driven transmission and a torque reversing device for reversing a direction of the torque transmitted to the drive wheels 2 between the forward direction and the backward direction. Specifically, the torque reversing device is comprised of a forward clutch engaged to establish the forward stage and a reverse clutch engaged to establish the reverse stage. Therefore, the power transmission between the engine 1 and the automatic transmission 3 is interrupted by disengaging both of the forward clutch and the reverse brake. That is, a neutral stage of the automatic transmission 3 is established. In this case, the forward clutch and the reverse brake serve as the clutch device of the invention.

Given that the DCT is used as the automatic transmission 3, the power transmission between the engine 1 and the automatic transmission 3 is interrupted by disengaging both of the clutches of the DCT. That is, a neutral stage of the automatic transmission 3 is established. In this case, the two clutches of the DCT serve as the clutch device of the invention.

Given that the AMT is used as the automatic transmission 3, the power transmission between the engine 1 and the automatic transmission 3 is interrupted by disengaging a clutch of the conventional manual transmission device and the engine 1. That is, a neutral stage of the automatic transmission 3 is established. In this case, the above-explained clutch serves as the clutch device of the invention.

The control system of the present invention may be applied not only to a hybrid vehicle in which the prime mover is comprised of an internal combustion engine and an electric motor, but also to an electric vehicle in which only the electric motor is used as the prime mover. In order to selectively connect and disconnect the power transmission route between the prime mover and the drive wheels 2, according to the present invention, the vehicle Ve is provided with the clutch device 7 irrespective of a kind of the prime mover such as the engine 1, the electric motor, and a hybrid drive unit comprised of the engine 1 and the electric motor. For example, a friction clutch and a dog clutch may be used as the clutch device 7, and in case of using the friction clutch, any of a wet type and a dry type friction clutches may be used. That is, any kinds of clutch devices may be used as the clutch device 7 to selectively allow and interrupt a power transmission route between the prime mover such as the engine 1, the electric motor, and a hybrid drive unit and the drive wheels 2 to transmit power therebetween.

Given that the vehicle Ve is the hybrid vehicle or the electric vehicle having the electric motor as the prime mover, a braking force can be applied to the vehicle Ve by carrying out a regeneration control of the electric motor while engaging the clutch device 7. Specifically, a braking torque can be applied to the drive wheels 2 to decelerate the vehicle Ve during running by operating the electric motor as a generator while engaging the clutch device 7.

In order to control an operating condition of the engine 1 and engagement state of the clutch device 7, the vehicle Ve is provided with an electronic control unit (ECU) 8 as a controller that is configured to carry out a calculation based on input data and preinstalled data, and to output a calculation result in the form of a command signal. For example, detection signals from a wheel speed sensor 9 adapted to detect a rotational speed of each wheel of the vehicle Ve, an accelerator sensor 10 adapted to detect a depressing angle or a depressing amount of an accelerator pedal, an engine speed sensor 11 adapted to detect a speed of the output shaft of the engine 1, a longitudinal acceleration sensor 12 adapted to detect a longitudinal acceleration of the vehicle Ve, a lateral acceleration sensor 13 adapted to detect a lateral acceleration of the vehicle Ve, an inclination sensor 14 adapted to detect an inclination angle of the vehicle Ve and so on are sent to the electronic control unit 8. Based on those signals, the electronic control unit 8 sends a command signals to the engine 1 to control the operating condition, and to the clutch device 7 to control the engagement state.

Given that the electric motor is used as the prime mover of the vehicle Ve, a detection signal from a speed sensor for the electric motor or a resolver is additionally sent to the electronic control unit 8. In this case, the electronic control unit 8 sends a command signal to the electric motor to control the operating condition.

In order to improve fuel economy of the vehicle Ve thus structured, the control system of the present invention carries out the coasting control of the vehicle Ve by bringing the clutch device 7 into disengagement during running. According to the present invention, specifically, the coasting control is carried out to cutoff a power transmission route between the engine 1 and the drive wheel 2 by disengaging the clutch device 7, under a condition that the accelerator pedal is not depressed, in other words, completely returned while the vehicle Ve is moving at a speed higher than a predetermined speed. Under the coasting control, however, the engine 1 will not be stopped. That is, under the coasting control, although the speed of the engine 1 is lowered almost to an idling speed, the fuel combustion is carried on.

Thus, under the coasting control, a power transmission between the engine 1 and the drive wheel 2 is interrupted. Therefore, a braking torque resulting from a pumping loss of the engine 1 and a drag torque will not be applied to the drive wheels 2 of the vehicle Ve. In other words, an engine braking force will not be applied to the vehicle Ve. Therefore, under the coasting control, a possible coasting distance achieved by an inertia energy of the vehicle Ve is extended. Consequently, a cruising distance of the vehicle Ve per unit of fuel can be extended so that the fuel economy of the vehicle Ve can be improved.

Under the coasting control, the fuel economy of the vehicle Ve can be further improved if the fuel combustion of the engine 1 is stopped while disengaging the clutch device 7. However, if the fuel combustion of the engine 1 is stopped, a power for actuating auxiliaries such as an oil pump and a compressor for an air conditioner, and a power for actuating a hydraulic power steering system and a brake system will be lost. In this case, therefore, a substitute power source (e.g., an electric motor) and a hydraulic accumulator are required for the case of cessation of the engine 1. By contrast, given that the engine 1 is not stopped under the coasting control, the power for driving those auxiliaries and the power steering and the brake systems will not be lost. In this case, therefore, the coasting control can be carried out easily in the conventional vehicles without requiring the additional power source.

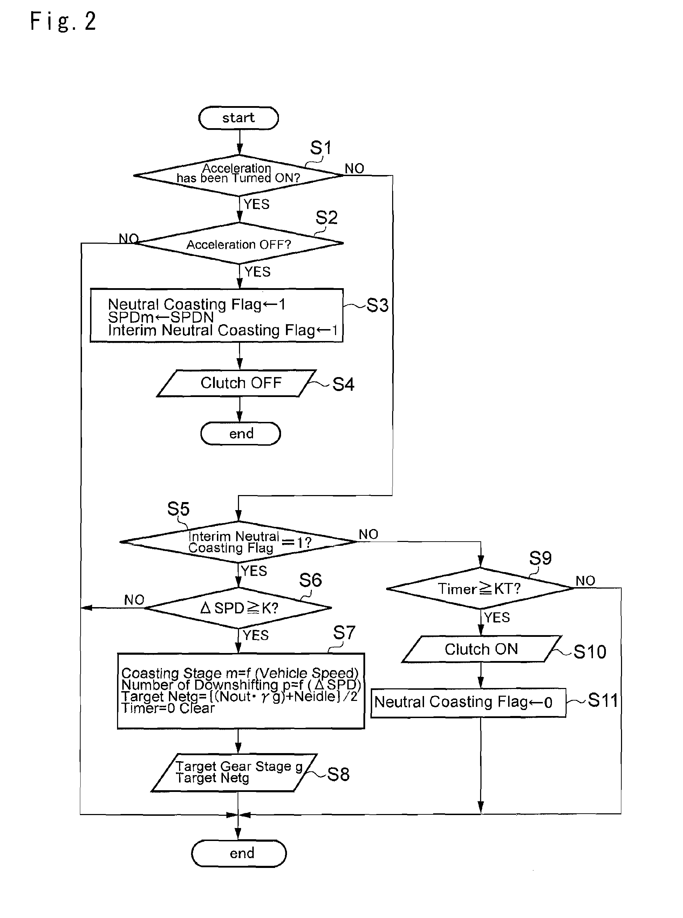

The control system of the present invention is configured to carry out the coasting control without diminishing drivability of the vehicle Ve by continuing or terminating the coasting control properly even if a speed of the vehicle Ve is changed by a change in a road grade during execution of the coasting control. An example of such control is shown in Fig. 2, and the routine shown therein is repeated at predetermined short intervals. The routine shown in Fig. 2 is executed upon satisfaction of preconditions to commence the coasting control.

The preconditions for commencing the coasting control includes: a fact that the vehicle Ve runs at a speed higher than a predetermined speed; a fact that the vehicle Ve runs on a road where a road grade falls within a predetermined range; and a fact that the engine 1 is combusted. That is, the predetermined speed is a reference value of the vehicle speed used to determine to execute the neutral coasting control, and to this end, a threshold value of the vehicle speed is set to a value possible to judge a speed range where the coasting control is effective, based on a simulation result or an experiment. Specifically, given that the vehicle Ve has a torque converter, the threshold value is set e.g., to 15 to 20 km/h that is a speed of the vehicle Ve creeping on a flat road while idling the engine 1. In turn, the predetermined range of the road grade is a reference range to determine if the road is a flat road where the gradient is 0%, or if an upgrade or a downgrade will not affect a running load and ignorable. To this end, such range of the road grade is determined based on a simulation result or an experiment, and may be altered in accordance with the vehicle speed. For example, the range of the road grade is set to ± 2% within the speed range lower than 40km/h, and set to ±4% within the speed range higher than 40km/h.

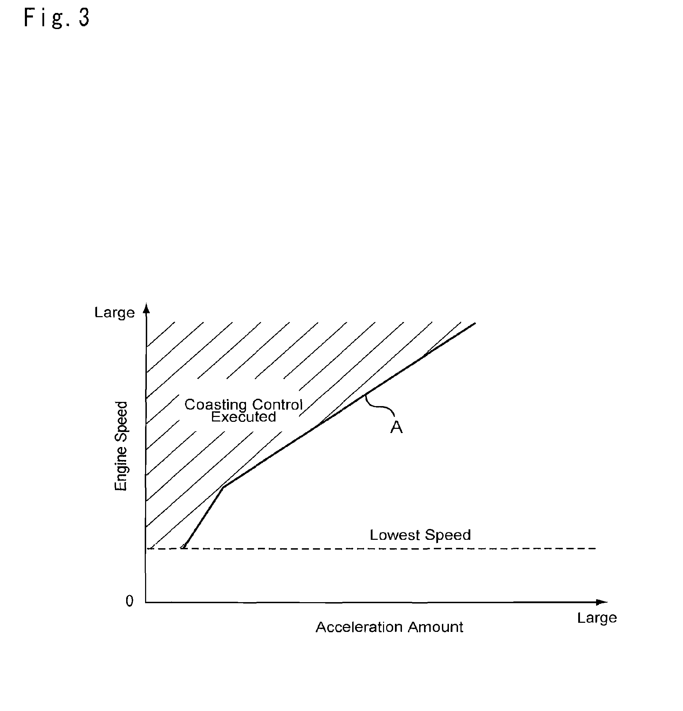

According to the control example shown in Fig. 2, first of all, it is determined whether or not the accelerator was "ON" during the previous routine. Specifically, it is determined whether or not an operating amount of the accelerator was not zero or smaller than a predetermined operating amount (at step S1). According to the present invention, the coasting control is triggered by the fact that the operating amount of the accelerator is reduced to zero or to be smaller than the predetermined amount, in addition to a satisfaction of all of the above-explained preconditions for commencing the coasting control. Specifically, the fact that the operating amount of the accelerator is reduced to zero or to be smaller than a predetermined value is a condition to determine whether or not the accelerator pedal depressed by the driver is released and returned. The reference value of the operating amount of the accelerator used to determine to execute the coasting control is not necessarily to be zero. For example, as indicated in the map shown in Fig. 3, the neutral coasting control is commenced when the operating amount of the accelerator is reduced to be smaller than a reference value A. Optionally, as shown in Fig. 3, the reference value A may be altered in accordance with the engine speed Ne.

If the accelerator was "ON", that is, if the operating amount of the accelerator was not smaller than the reference value A in the beginning of the routine and during the previous routine so that the answer of step S1 is YES, the routine advances to step S2. At step S2, it is determined whether or not the accelerator is turned "OFF", that is, whether or not the operating amount of the accelerator is reduced to be smaller than the reference value A.

If the accelerator has not yet been turned "OFF", that is, if the operating amount of the accelerator has not yet reduced to be smaller than the reference value A so that the answer of step S2 is NO, the routine is ended without carrying out any specific control. By contrast, if the accelerator has already been turned "OFF", that is, if the operating amount of the accelerator has already been reduced to be smaller than the reference value A so that the answer of step S2 is YES, the routine advances to step S3. At step S3, an execution flag of the neutral coasting control is set to "1", a current vehicle speed SPD is detected, and the detected vehicle speed SPD is memorized as an initial vehicle speed $SPD_m$ at a commencement of the neutral coasting control. In addition, an interim execution flag of the neutral coasting control is set to "1".

Specifically, the execution flag of the neutral coasting control is set to "1" to execute the neutral coasting control, and set to "0" to terminate the neutral coasting control. Accordingly, the execution flag of the neutral coasting control is set to "0" in the beginning of this routine. On the other hand, the interim execution flag of the neutral coasting control is used to advance the routine to after-mentioned step S9 to adjust a timing to engage the clutch device 7. To this end, the interim execution flag of the neutral coasting control is also set to "1" when executing the neutral coasting control. By contrast, the interim execution flag of the neutral coasting control is set to "0" if an increasing amount of the vehicle speed $\Delta$SPD exceeds a predetermined value K at after-mentioned steps S6 and S7. Accordingly, the interim execution flag of the neutral coasting control is also set to "0" in the beginning of this routine.

Then, the clutch device 7 is turned "OFF", in other words, the clutch device 7 is brought into disengagement (at step S4). Thus, the neutral coasting control of the present invention is executed if the operating amount of the accelerator is reduced to be smaller than the reference value A under the condition where the preconditions of the coasting control are satisfied. Then, the routine is ended.

If the accelerator was "OFF", that is, if the operating amount of the accelerator was smaller than the reference value A during the previous routine so that the answer of step S1 is NO, the routine advances to step S5. At step S5, it is determined whether or not the interim execution flag of the neutral coasting control is "1", that is, whether or not the neutral coasting control is being executed.

If the interim execution flag of the neutral coasting control is "1", that is, if the neutral coasting control has already been commenced so that the answer of step S5 is YES, the routine advances to step S6 to determine whether or not the increasing amount of the vehicle speed $\Delta$SPD is greater than the predetermined value K. Specifically, the increasing amount of the vehicle speed $\Delta$SPD is a deviation between the current vehicle speed SPD and the initial vehicle speed $SPD_m$, and the increasing amount of the vehicle speed $\Delta$SPD can be calculated by the following formula:

$$\Delta SPD = SPD - SPD_m.$$

The predetermined value K is a reference value of the increasing amount of the vehicle speed $\Delta$SPD to forecast a prospective decelerating demand during execution of the neutral coasting control. To this end, the predetermined value K is preinstalled based on a result of simulation. Thus, when the increasing amount of the vehicle speed $\Delta$SPD exceeds the predetermined value K, the decelerating demand of the driver is expected to increase.

If the increasing amount of the vehicle speed $\Delta$SPD is smaller than the predetermined value K so that the answer of step S6 is NO, the routine is ended without carrying out any specific control. That is, in case the increasing amount of the vehicle speed $\Delta$SPD is smaller than the predetermined value K, the decelerating demand of the driver is not expected to increase. In this case, therefore, the controller determines that it is unnecessary to apply a braking force to the vehicle by terminating the neutral coasting control, and continues the neutral coasting control.

By contrast, if the increasing amount of the vehicle speed $\Delta$SPD is larger than the predetermined value K so that the answer of step S6 is YES, the routine advances to step S7 to terminate the neutral coasting control and to return to the normal control. In this case, the speed of the vehicle Ve has been increased to be greater than the predetermined value K during coasting, therefore, the driver may feel uncomfortable feeling or fear if the vehicle speed is further increased. In order to reduce or suppress further increment of the vehicle speed thus reached to the predetermined value K, the neutral coasting is terminated, and a control to return to the normal control is commenced from step S7 to apply an engine braking force to the vehicle Ve.

At step S7, first of all, a coasting stage m is determined. Specifically, the coasting stage m is a gear stage established by the automatic transmission 3 during execution of the neutral coasting control, and it can be obtained based on the speed of the vehicle Ve coasting under the neutral coasting control.

Then, number of downshifting stages p is determined.

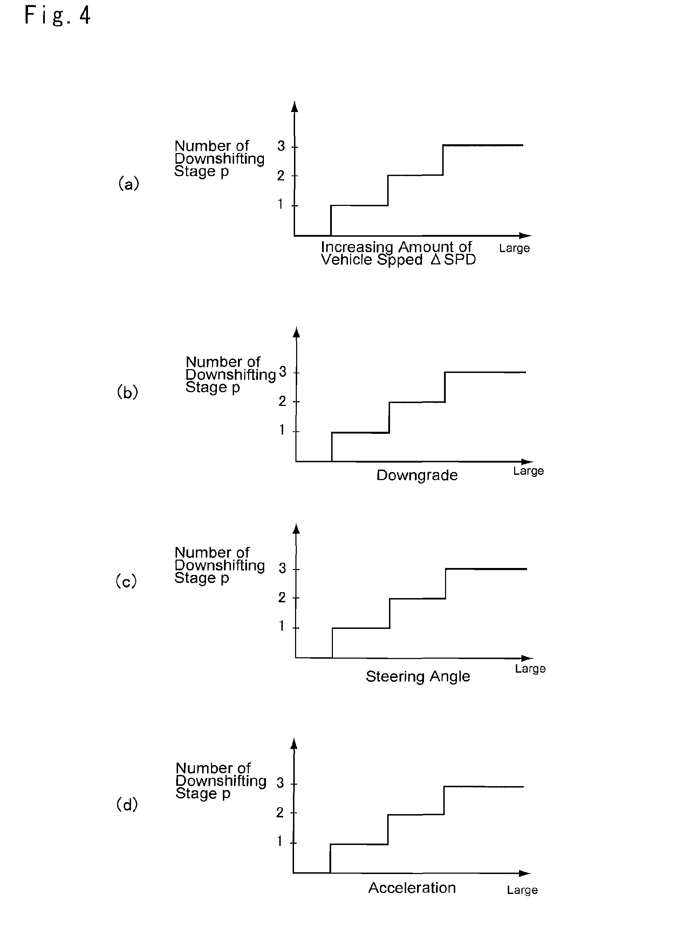

Specifically, the number of downshifting stages p is number of gear stages of the automatic transmission 3 to be shifted from the current gear stage by a downshifting to terminate the neutral coasting control. To this end, the number of downshifting stages p is determined based on the increasing amount of the vehicle speed $\Delta$SPD calculated at step S6. For example, the map shown in Fig. 4 (a) may be preinstalled to determine the number of downshifting stages p.

Thereafter, a target gear stage g is determined. Specifically, the target gear stage g is a gear stage to be achieved by carrying out the downshifting of the automatic transmission 3 prior to bring the clutch device 7 into engagement to terminate the neutral coasting control. The target gear stage g can be calculated based on the coasting stage m and the number of downshifting stages p, as expressed by the following expression:

$$g = m - p.$$

Further, a target engine speed $N_{etg}$ is calculated. Specifically, target engine speed $N_{etg}$ can be calculated by the following formula:

$$N_{etg} = \{(N_{out} \cdot \gamma g) + N_{eidl}\} / 2$$

where $N_{out}$ is a rotational speed of the output shaft 3 of the automatic transmission 3, $\gamma$ g is a speed ratio of the gear stage g, and $N_{eidl}$ is an idling speed of the engine 1. In order to engage the clutch device smoothly at after-mentioned step S10, the rotational speed $N_e$ of the output shaft of the engine 1 is adjusted to the target input speed of the automatic transmission 3 in advance. That is, "$N_{out} \cdot \gamma$ g" in the above formula is a term to calculate the input speed $N_{in}$ of the automatic transmission 3. To this end, the target engine speed $N_{etg}$ is determined in a manner such that the engine speed $N_e$ is adjusted to an intermediate value between the input speed $N_{in}$ and the idling speed $N_{eidl}$. Specifically, the idling speed $N_{eidl}$ is a speed lower than a speed range of the engine 1 under the normal running, and a lowest speed at which the engine 1 free from the load is allowed to rotate autonomously. Here, the definition of the "normal running" is a condition where the vehicle Ve is powered by the engine 1 while engaging the clutch device 7.

In addition, an interim execution flag of the neutral coasting control is set to "0", and a timer value $T_{imer}$ is control is reset to "0". The timer value $T_{imer}$ is a measurement value of a timer measuring an elapsed time for adjusting timing to engage the clutch device 7.

Then, a command signal to achieve the target gear stage g determined at the precedent step is sent to the automatic transmission 3, and a command signal to achieve the target engine speed $N_{etg}$ calculated at the precedent step is sent to the engine 1 (at step S8). Consequently, the target gear stage g is established by the automatic transmission 3, and a rotational speed of the engine 1 is adjusted to the target engine speed $N_{etg}$. Then, the routine is ended.

By contrast, if the interim execution flag of the neutral coasting control is not "1", that is, if the interim execution flag of the neutral coasting control is set to "0" at step S7 so that the answer of step S5 is NO, the routine advances to step S9 to determine whether or not the timer value $T_{imer}$ is equal to or larger than a preset time KT for adjusting the timing to engage the clutch device 7. For example, the preset time KT is determined taking account of a response time of the speed change operation of the automatic transmission 3 and a response time of speed control of the engine 1, based on a simulation result or an experiment.

If the timer value $T_{imer}$ has not yet reached the preset time KT so that the answer of step S9 is NO, the routine is ended while skipping subsequent steps. That is, the determination of step S9 is repeated until the preset time KT has elapsed from the point at which the determination to terminate the neutral coasting control was made.

By contrast, if the timer value $T_{imer}$ has reached the preset time KT so that the answer of step S9 is YES, the routine advances to step S10 to engage the clutch device 7. That is, the neutral coasting control is terminated. Thus, the clutch device 7 is brought into engagement after the preset time KT has elapsed. As a result, the speed change operation of the automatic transmission 3, the speed control of the engine 1, and the engaging operation of the clutch device 7 can be executed at appropriate timings while taking account of response delays in the speed change operation of the automatic transmission 3 and the speed control of the engine 1 at step S8. For this reason, the clutch device 7 is allowed to be engaged smoothly and promptly at step S10.

After thus bringing the clutch device 7 into engagement to terminate the neutral coasting control, the routine is ended. Specifically, if the answer of step S5 is NO and the routine advances to steps S9 and S10, the execution flag of the neutral coasting control is set to "0" at step S11 and the routine is ended.

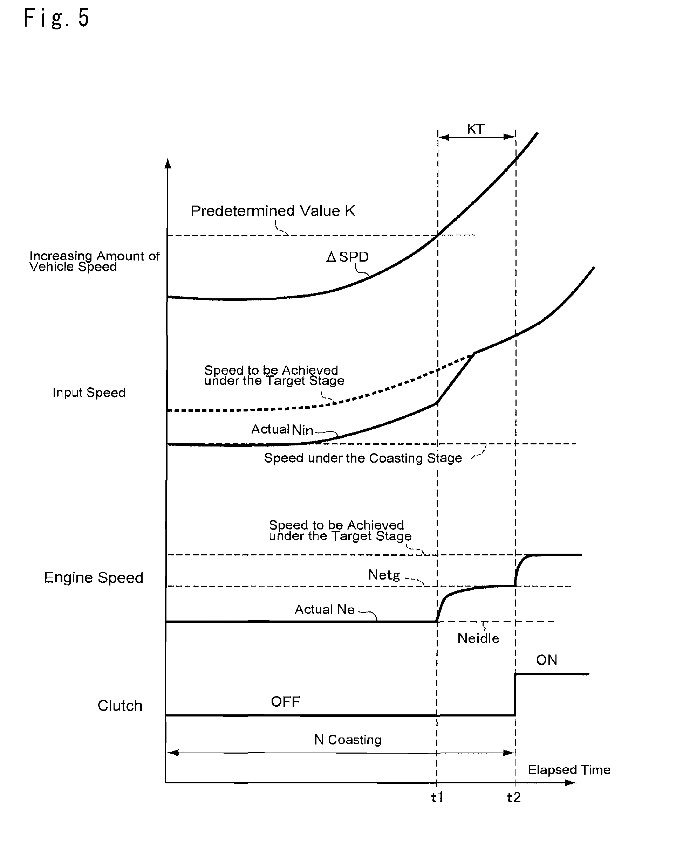

Fig. 5 is a time chart indicating changes in the input speed of the automatic transmission 3 and the speed of the engine 1 under the neutral coasting control of the present invention. When the increasing amount of the vehicle speed $\Delta$SPD during execution of the neutral coasting control exceeds the predetermined value K at point t1, the returning control to the normal control is commenced. Specifically, the engine speed $N_e$ is increased from the idling speed $N_{eidl}$ to the target engine speed $N_{etg}$, and a downshifting is carried out to shift the gear stage of the automatic transmission 3 to the target stage g. Consequently, the input speed $N_{in}$ of the automatic transmission 3 is increased. In this situation, the engine speed $N_e$ and the input speed $N_{in}$ are inevitably delayed to be increased to the target engine speed $N_{etg}$ and the speed to be achieved under the target stage g. In order to prevent such response delay, the preset time KT is started from the point t1 at which a command to increase the engine speed Ne and a command to carry out a downshifting of the automatic transmission 3 are outputted.

Then, when the preset time KT has elapsed at point t2, the clutch device 7 is brought into engagement to terminate the neutral coasting control. Thus, the clutch device 7 is engaged after the preset time KT has elapsed so that the clutch device 7 is allowed to be engaged under the condition where the engine speed $N_e$ and the input speed $N_{in}$ are properly raised to the target values. Consequently, the clutch device 7 is allowed to be engaged without causing shocks so that the neutral coasting control can be terminated smoothly.

As described, according to the control example shown in Fig. 2, the prospective decelerating demand of the driver during execution of the neutral coasting control is determined at step S6. Such prospective decelerating demand of the driver during execution of the neutral coasting control may also be estimated by the following procedures. For example, the determination of step S6 may be modified to determine whether or not a road grade is a downgrade steeper than a predetermined value. In this case, if the road grade is a downgrade steeper than a predetermined value, the decelerating demand of the driver is expected to increase. By contrast, if the road grade is a downgrade which is not steeper than a predetermined value or an upgrade, the decelerating demand of the driver is not expected to increase. Accordingly, if the road grade is a downgrade which is not steeper than a predetermined value or an upgrade so that the answer of step S6 is NO, the routine is ended while skipping subsequent steps. To the contrary, if the road grade is a downgrade steeper than a predetermined value so that the answer of step S6 is YES, the routine advances to steps S7 and S8 to terminate the neutral coasting control and to carry out the returning control.

In this case, the number of downshifting stages p is determined depending on the downgrade of the road. To this end, a map shown in Fig. 4 (b) is used to determine the number of downshifting stages p.

Instead, the determination of step S6 may be modified to determine whether or not a steering angle of the vehicle Ve is larger than a predetermined angle. In this case, if the steering angle is larger than a predetermined angle, the decelerating demand of the driver is expected to increase. By contrast, if the steering angle is smaller than a predetermined angle, the decelerating demand of the driver is not expected to increase. Accordingly, if the steering angle is smaller than a predetermined angle so that the answer of step S6 is NO, the routine is ended while skipping subsequent steps. To the contrary, if the steering angle is larger than a predetermined angle so that the answer of step S6 is YES, the routine advances to steps S7 and S8 to terminate the neutral coasting control and to carry out the returning control.

In this case, the number of downshifting stages p is determined depending on the steering angle of the vehicle Ve. To this end, a map shown in Fig. 4 (c) is used to determine the number of downshifting stages p.

In addition, the determination of step S6 may be modified to determine whether or not an acceleration of the vehicle Ve is greater than a predetermined value. For this purpose, at least any of a longitudinal acceleration and a lateral acceleration of the vehicle Ve is detected to be determined if it is greater than the predetermined value or not. For example, if the detected lateral acceleration is greater than the predetermined value, the decelerating demand of the driver is expected to increase. By contrast, if the detected lateral acceleration is less than the predetermined value, the decelerating demand of the driver is not expected to increase. Accordingly, if the acceleration of the vehicle Ve is less than the predetermined value so that the answer of step S6 is NO, the routine is ended while skipping subsequent steps. To the contrary, if the acceleration of the vehicle Ve is greater than the predetermined value so that the answer of step S6 is YES, the routine advances to steps S7 and S8 to terminate the neutral coasting control and to carry out the returning control.

In this case, the number of downshifting stages p is determined depending on the acceleration of the vehicle Ve. To this end, a map shown in Fig. 4 (d) is used to determine the number of downshifting stages p.

Thus, if the operating amount of the accelerator is reduced to zero during running of the vehicle Ve, the control system of the present invention reduces to speed of the engine 1 to the idling speed while disengaging the clutch device 7 to interrupt power transmission between the engine 1 and the drive wheels 2. That is, the neutral coasting control is executed to allow the vehicle to coast. Consequently, a possible coasting distance of the vehicle Ve under the condition in which the engine 1 is free from the load can be extended so that the fuel economy of the vehicle Ve can be improved.

During execution of the coasting control, the prospective decelerating demand of the driver is estimated based on a change in the vehicle speed, an acceleration, a change in a road grade etc. during execution of the coasting control. If the controller determines that the decelerating demand of the driver will be increased, the clutch device 7 is brought into engagement to terminate the coasting control, and downshifting is carried out to increase a speed ratio of the automatic transmission 3. Thus, if the decelerating demand is expected to increase, the coasting control is terminated to apply an engine braking force to the vehicle Ve. In this situation, a braking force is also applied to the vehicle by carrying out downshifting. Therefore, a speed or an acceleration of the vehicle Ve can be reduced or suppressed in line with the decelerating or braking demand of the driver during execution of the coasting control. For this reason, the coasting control can be carried out properly without diminishing drivability of the vehicle.

In addition, according to the present invention, the coasting control can be executed and terminated taking account of the effect of the vehicle speed. Specifically, the coasting control is executed if the vehicle speed falls within the speed range higher than the predetermined speed where the coasting control is effective, and the coasting control is terminated or inhibited if the vehicle speed is lower than the predetermined speed where the coasting control is not effective. Thus, the coasting control can be executed and terminated properly depending on the situation.

Given that the internal combustion engine is used in the vehicle Ve, the control system of the invention executes the coasting control taking account of an operating condition of the engine 1 and the engine speed $N_e$. Specifically, the coasting control is carried out under the condition where the engine 1 is combusted, and the engine speed $N_e$ is lowered to the idling speed $N_{eidle}$ during execution of the coasting control. For this reason, the coasting control can be executed effectively to improve fuel economy of the vehicle Ve.

Here will be briefly explained a relation between the above-explained example and the present invention. The functional means to carry out the controls of steps S1 and S2 serve as the "means that detects an operation of an accelerator" of the invention, the functional means to carry out the control of step S4 serves as the "execution means" of the invention, the functional means to carry out the control of step S6 serves as the "estimation means" of the invention, and the functional means to carry out the controls of steps S7, S8, S9 and S10 serve as the "returning means" of the invention.

**Claims**

1. A vehicle control system, that is applied to a vehicle having a clutch device adapted to selectively connect and disconnect a power transmission route between a prime mover and drive wheels, and that is configured to disconnect the power transmission route during running to allow the vehicle to coast, **characterized by**:

   a means that detects a vehicle speed;
   a means that detects an operation of an accelerator by a driver;
   an execution means that executes a coasting control when an operating amount of an accelerator is reduced to be smaller than a predetermined value during running, by bringing the clutch device into disengagement to disconnect the power transmission route so as to allow the vehicle to coast;
   an estimation means that estimates a decelerating demand of the driver during execution of the coasting control; and
   a returning means that terminates the coasting control by bringing the clutch device into engagement to connect the power transmission route, and that increases a speed ratio of the automatic transmission when the decelerating demand is expected to increase.

2. The vehicle control system as claimed in claim 1, wherein the estimation means includes a means that determines a fact that the decelerating demand increases if an increasing amount of the vehicle speed is larger than a predetermined value.

3. The vehicle control system as claimed in claim 1, further comprising:

   a means that detects an acceleration of the vehicle; and
   wherein the estimation means includes a means that determines a fact that the decelerating demand increases if at least any of a longitudinal acceleration and a lateral acceleration of the vehicle is greater than a predetermined value.

4. The vehicle control system as claimed in claim 1, further comprising:

   a means that detects a road gradient; and
   wherein the estimation means includes a means that determines a fact that the decelerating demand increases if the road gradient is steeper than a predetermined downgrade.

5. The vehicle control system as claimed in claim 1, further comprising:

   a means that detects a steering angle of the vehicle; and
   wherein the estimation means includes a means that determines a fact that the decelerating demand increases if the steering angle is larger than a predetermined angle.

6. The vehicle control system as claimed in any of claims 1 to 5, further comprising:

   a means that detects an output speed of an output shaft of the prime mover; and
   wherein the returning means includes a means that adjusts the output speed of the prime mover to a target input speed of the automatic transmission of a case in which the speed ratio is increased, when the clutch device is brought into engagement.

7. The vehicle control system as claimed in any of claims 1 to 6,
   wherein the execution means includes a means that executes the coasting control if the operating amount of the accelerator is reduced to be smaller than the predetermined value during running, and the vehicle runs at a speed higher than a predetermined speed; and
   wherein the returning means includes a means that terminates the coasting control when the vehicle speed is reduced to be lower than the predetermined speed.

8. The vehicle control system as claimed in any of claims 1 to 7,
   wherein the prime mover includes an engine that generates power by burning fuel; and
   wherein the vehicle control system is further comprised of a means that detects a speed of the engine; and
   wherein the execution means includes a means that executes the coasting control if the operating amount of the accelerator is reduced to be smaller than the predetermined value during running and the engine is combusted, and to control the engine during execution of the coasting control in a manner such that the engine speed is reduced to an idling speed that is lower than that of the case in which the vehicle runs without carrying out the coasting control.

Fig. 1

Fig. 2

```
                    ┌──────────┐
                    │  start   │
                    └──────────┘
                         │
                         ▼                    S1
                  ╱──────────────╲
                 ╱  Acceleration  ╲      NO
                ╲ has been Turned ON?╱─────────────┐
                 ╲──────────────╱                  │
                         │ YES                      │
                         ▼              S2          │
                  ╱──────────────╲                  │
         NO      ╱                ╲                 │
    ┌───────────╲ Acceleration OFF?╱               │
    │            ╲────────────────╱                │
    │                    │ YES                      │
    │                    ▼                          │
    │   ┌─────────────────────────────┐  S3         │
    │   │ Neutral Coasting Flag←1     │             │
    │   │ SPDm←SPDN                   │             │
    │   │ Interim Neutral Coasting Flag←1│          │
    │   └─────────────────────────────┘             │
    │                    │                          │
    │                    ▼                          │
    │        ╱─────────────────╱  S4                │
    │       ╱  Clutch OFF     ╱                     │
    │      ╱─────────────────╱                      │
    │                    │                          │
    │                    ▼                          │
    │              ┌──────────┐                     │
    │              │   end    │                     │
    │              └──────────┘                     │
    │                                               │
    │      S5                                       │
    │   ╱──────────────╲                            │
    │  ╱ Interim Neutral ╲       NO                 │
    │ ╲ Coasting Flag =1? ╱──────────────┐          │
    │  ╲──────────────╱                  │          │
    │          │ YES         S6          ▼      S9  │
    │          ▼                   ╱──────────╲     │
    │   ╱──────────╲   NO         ╱ Timer≧KT? ╲ NO  │
    │◄─╱ ΔSPD≧K?   ╱──────┐      ╲────────────╱─────┤
    │   ╲──────────╱      │           │ YES         │
    │          │ YES      │           ▼             │
    │          ▼    S7     │   ╱──────────────╱ S10  │
    │ ┌──────────────────┐ │  ╱  Clutch ON   ╱      │
    │ │Coasting Stage m=f(Vehicle Speed)│  ╱────────╱       │
    │ │Number of Downshifting p=f(ΔSPD)│      │            │
    │ │Target Netg=[(Nout·γg)+Neidle]/2│      ▼            │
    │ │Timer=0 Clear    │ │  ┌────────────────────┐       │
    │ └──────────────────┘ │  │Neutral Coasting Flag←0│ S11 │
    │          │           │  └────────────────────┘      │
    │          ▼           │           │                  │
    │ ╱────────────────╱ S8│           │                  │
    │╱Target Gear Stage g╱ │           │                  │
    │ ╲Target Netg      ╱  │           │                  │
    │  ╲───────────────╱   │           │                  │
    │          │           │           │                  │
    └──────────┴───────────┴───────────┴──────────────────┘
                         │
                         ▼
                   ┌──────────┐
                   │   end    │
                   └──────────┘
```

Fig. 3

Fig. 4

(a)

Number of
Downshifting
Stage p

Increasing Amount of
Vehicle Spped △SPD    Large

(b)

Number of
Downshifting
Stage p

Downgrade    Large

(c)

Number of
Downshifting
Stage p

Steering Angle    Large

(d)

Number of
Downshifting
Stage p

Acceleration    Large

14

# Fig. 5

**INTERNATIONAL SEARCH REPORT**

| International application No. |
| --- |
| PCT/JP2012/065699 |

A. CLASSIFICATION OF SUBJECT MATTER
*F16D48/02*(2006.01)i, *F16H61/02*(2006.01)i

According to International Patent Classification (IPC) or to both national classification and IPC

B. FIELDS SEARCHED

Minimum documentation searched (classification system followed by classification symbols)
F16D48/02, F16H61/02

Documentation searched other than minimum documentation to the extent that such documents are included in the fields searched
Jitsuyo Shinan Koho        1922-1996    Jitsuyo Shinan Toroku Koho    1996-2012
Kokai Jitsuyo Shinan Koho    1971-2012    Toroku Jitsuyo Shinan Koho    1994-2012

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y<br>A | JP 2011-21702 A  (Isuzu Motors Ltd.),<br>03 February 2011 (03.02.2011),<br>claim 1<br>(Family: none) | 1<br>2-8 |
| Y<br>A | JP 2006-335113 A  (Toyota Motor Corp.),<br>14 December 2006 (14.12.2006),<br>claim 4<br>(Family: none) | 1<br>2-8 |
| Y<br>A | JP 2012-2358 A  (Dr. Ing. h.c.F. Porsche AG.),<br>05 January 2012 (05.01.2012),<br>claims<br>& DE 102010024045 A1    & FR 2961461 A1 | 1<br>2-8 |

☐ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>20 July, 2012 (20.07.12) | Date of mailing of the international search report<br>31 July, 2012 (31.07.12) |
| --- | --- |
| Name and mailing address of the ISA/<br>Japanese Patent Office | Authorized officer |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011163535 A
- JP 2010060010 A
- JP 2008106841 A